# EUROPÄISCHE PATENTSCHRIFT

(11) **EP 2 165 053 B1**
(45) Veröffentlichungstag und Bekanntmachung des Hinweises auf die Patenterteilung: **24.01.2018**
(21) Anmeldenummer: 08759838.9
(22) Anmeldetag: 21.05.2008
(51) Int. Cl.: F01N 3/20

(54) **VORRICHTUNG ZUM DOSIERTEN EINSPRITZEN EINES FLÜSSIGEN ABGASNACHBEHANDLUNGSMITTELS**
DEVICE FOR THE METERED INJECTION OF A LIQUID PROCESSING AGENT FOR EXHAUST GASES
DISPOSITIF D'INJECTION DOSÉE D'UN AGENT LIQUIDE DE POST-TRAITEMENT DES GAZ D'ÉCHAPPEMENT

(30) Priorität: 11.06.2007 DE 102007026892
(43) Veröffentlichungstag der Anmeldung: 24.03.2010
(73) Patentinhaber: Robert Bosch GmbH, 70442 Stuttgart (DE)
(72) Erfinder: REITER, Ferdinand, 71706 Markgroeningen (DE); STRAUCH, Armin, 71701 Schwieberdingen (DE); BERNEGGER, Leopold, A-5421 Adnet (AT)
(86) Internationale Anmeldenummer: PCT/EP2008/056234
(87) Internationale Veröffentlichungsnummer: WO 2008/151908

(56) Entgegenhaltungen:
- EP-A- 1 388 648
- WO-A-02/42616
- DE-A1- 10 147 172
- DE-A1- 10 340 075
- DE-A1- 10 349 143

## Beschreibung

Die Erfindung betrifft eine Vorrichtung zum dosierten Einspritzen eines flüssigen Abgasnachbehandlungsmittels, vorzugsweise einer wässrigen Harnstofflösung, in eine Abgasanlage eines Verbrennungsmotors, mit mindestens einem einen Arbeitsraum aufweisenden Vorrichtungskörper und mindestens einem Volumenkompensationselement, das ein Arbeitsraumvolumen des Arbeitsraums entsprechend einer Volumenänderung des im Arbeitsraum befindlichen flüssigen Abgasnachbehandlungsmittels bei dessen Phasenübergang anpasst.

### Stand der Technik

Eine derartige Vorrichtung ist als "gefrierfest" ausgebildete Vorrichtung zum dosierten Einspritzen eines flüssigen Abgasnachbehandlungsmittels bekannt. Die Vorrichtung ist zum Beispiel Teil eines nicht vollständig dargestellten Einspritzsystems zum Einspritzen des Abgasnachbehandlungsmittels in die Abgasanlage eines Verbrennungsmotors. Derartige Einspritzsysteme werden zum Beispiel zusammen mit einem SCR-Katalysator (SCR, selective catalytic reduction) der Abgasanlage zur Reduktion der Stickoxidemission eingesetzt. Die selektive katalytische Reduktion ist eine effiziente Methode, um in Abgasen Stickoxide (NOx) zu entfernen und zu Stickstoff und Wasser zu reduzieren. Als Reduktionsmittel wird hierbei meist Ammoniak (NH₃) verwendet, das aus einem NH₃-Zwischenspeicher, wie zum Beispiel einer wässrigen Harnstofflösung (AdBlue) der Abgasanlage zudosiert wird. Das Einspritzsystem weist Komponenten wie zum Beispiel einen Tank, eine Fördereinrichtung (zum Beispiel eine Pumpe), eine Dosiereinrichtung, eine Einspritzeinrichtung (zum Beispiel ein Ventil) und ein die vorstehend genannten Komponenten verbindendes Leitungssystem auf. Da die wässrigen Harnstofflösung bei einem Betriebsdruck der Vorrichtung unterhalb von -11°C einfriert, muss die wässrige Harnstofflösung aus gefrierempfindlichen Vorrichtungen, die einen mit wässriger Harnstofflösung gefluteten Arbeitsraum aufweisen, entweder entfernt werden oder die Vorrichtung muss gefrierfest ausgebildet sein. Dazu weist die Vorrichtung zum Beispiel ein kompressibles Volumenkompensationselement auf.

Die WO 02/42616 offenbart eine Ventilanordnung zum bedarfsgerechten Dosieren einer wässrigen Harnstofflösung, die einen Arbeitsraum aufweist, in dem ein kompressibles Element angeordnet ist, sodass sich das Arbeitsvolumen des Arbeitsraums verändern kann, falls die darin enthaltene wässrige Harnstofflösung einen Phasenübergang durchläuft. Die EP 1388648 beschreibt eine Abgasnachbehandlungsanordnung, welche mit Kraftstoffwärme beheizt wird. Die DE 10349143 zeigt eine Dosiereinheit für ein Reduktionsmittel einer Abgasnachbehandlungsanordnung, welche ein Ausgleichselement zur Frostkompensation aufweist.

### Offenbarung der Erfindung

Die Erfindung zeichnet sich durch die Vorrichtung mit den Merkmalen des Anspruchs 1 aus. Zur gefrierfesten Ausbildung der Vorrichtung ist vorgesehen, dass das Material des Volumenkompensationselements einen derartigen temperaturabhängigen Ausdehnungskoeffizienten aufweist, dass auf die Volumenveränderung mit einer durch das Volumenkompensationselement bewirkten Volumenänderung reagiert wird. Das Volumenkompensationselement bewirkt direkt oder indirekt durch seine Volumenänderung eine Veränderung des Arbeitsraumvolumens. Diese Veränderung des Arbeitsraumvolumens entspricht einer Volumenänderung des im Arbeitsraum befindlichen flüssigen Abgasnachbehandlungsmittels bei dessen Phasenübergang in Abhängigkeit von seiner Temperatur. Insbesondere ist vorgesehen, dass das Material des Volumenkompensationselements inkompressibel ist. Die Volumenkompensation des Volumenkompensationselements erfolgt somit unabhängig oder weitgehend unabhängig von dem auf das Volumenkompensationselement wirkenden Druck. Im Zusammenhang mit dieser Anmeldung wird die Änderung des Volumens des Volumenkompensationselements stets als "Volumenänderung" und die Änderung des im Arbeitsraum befindlichen Volumens des Abgasnachbehandlungsmittels stets als "Volumenveränderung" bezeichnet.

Der Phasenübergang ist insbesondere ein Phasenübergang zwischen flüssiger und fester Phase. Ist das Abgasnachbehandlungsmittel zum Beispiel eine wässrige Lösung, so dehnt sich dieses beim Gefrieren aus (Gefrierexpansion durch Anomalie des Wassers). Bei einem Ausdehnen des Abgasnachbehandlungsmittels durch das Gefrieren weist das Volumenkompensationselement einen Ausdehnungskoeffizienten auf, bei dem sich das Volumen des Volumenkompensationselements bei Temperaturerniedrigung verringert. Verringert sich das Volumen des Abgasnachbehandlungsmittels hingegen beim Gefrieren, so weist das Volumenkompensationselement einen Ausdehnungskoeffizienten auf, bei dem sich das Volumen des Volumenkompensationselements bei Temperaturerniedrigung erhöht.
Weiterhin ist mit Vorteil vorgesehen, dass das Material des Volumenkompensationselements einen derartigen temperaturabhängigen Ausdehnungskoeffizienten aufweist, dass die Volumenveränderung des im Arbeitsraum befindlichen flüssigen Abgasnachbehandlungsmittels weitgehend durch eine Volumenänderung des Volumenkompensationselements kompensiert wird. Die Größe der Volumenänderung bezogen auf den Temperaturunterschied hängt dabei von dem Volumen des Volumenkompensationselements und seinem Ausdehnungskoeffizienten ab.

In einer nicht erfindungsgemäßen Ausgestaltung ist vorgesehen, dass das Volumenkompensationselement im Arbeitsraum angeordnet ist. Durch die Anordnung des Volumenkompensationselements im Arbeitsraum passt dieses das zur Aufnahme von Abgasnachbehandlungsmittel nutzbare Arbeitsraumvolumen durch Verdrängen unmittelbar an. Weiterhin verringert das Volumenkompensationselement das Arbeitsraumvolumen, sodass die absolute Volumenveränderung des im Arbeitsraum befindlichen flüssigen Abgasnachbehandlungsmittels beim Phasenübergang sinkt.
Mit Vorteil ist vorgesehen, dass das Volumenkompensationselement als Volumenkompensationshülse ausgebildet ist. Die Volumenkompensationshülse ist ein hülsenförmiges Volumenkompensationselement, das insbesondere in einem als Leitungselement ausgebildeten Arbeitsraum angeordnet ist. Die im Leitungselement angeordnete Volumenkompensationshülse lässt trotz Verringerung des Arbeitsraumvolumens eine Strömung durch das Leitungselement zu.
In einer vorteilhaften Ausgestaltung der Erfindung ist vorgesehen, dass die Vorrichtung als Ventil ausgebildet ist. Ein Ventil, insbesondere ein Einspritzventil, ist eine gefrierempfindliche Vorrichtung.
Nach einer Weiterbildung der Erfindung ist vorgesehen, dass im Arbeitsraum des Ventils eine Ventilnadel verschiebbar gelagert ist. Die Volumenkompensationshülse ist nicht erfindungsgemäß als eine die Ventilnadel umgreifende Volumenkompensationshülse ausgebildet. Das Ventil zum Einspritzen des flüssigen Abgasnachbehandlungsmittels ist eine gefrierempfindliche Vorrichtung, die durch die Volumenveränderung des flüssigen Abgasnachbehandlungsmittels beschädigt werden kann.

In einer nicht erfindungsgemäßen Ausführungsform ist vorgesehen, dass das Volumenkompensationselement in Abhängigkeit von seiner Volumenänderung unterschiedlich weit in den Arbeitsraum hineinragt. Das Volumenkompensationselement ist dazu zumindest teilweise in einer sich unmittelbar an den Arbeitsraum anschließenden Nebenkammer des Arbeitsraums angeordnet, der über eine Verbindung eine Ausdehnung Volumenkompensationselements in den Arbeitsraum hinein ermöglicht. Der Arbeitsraum und die Nebenkammer sind direkt miteinander verbunden oder sind alternativ durch eine flexible Membran voneinander getrennt. Die flexible Membran ist dabei derartig ausgebildet, dass sie ein Hineinragen des Volumenkompensationselements in den Arbeitsraum ermöglicht, um dessen Arbeitsvolumen zu verringern.
Nach einer Weiterbildung der Erfindung ist vorgesehen, dass das Volumenkompensationselement als Federelement ausgebildet ist. Dazu ist das Federelement aus einem Material, das die Gestalt des Federelements bei Temperaturänderung ändert, vorzugsweise aus einem Bimetall. Das Federelement ist insbesondere als Schraubenfeder ausgebildet, die sich in einer axial ausgestreckten Gestalt bei einer ersten Temperatur vom benachbarten Raum mit einem Teil bis in den Arbeitsraum hineinragt und bei einer zweiten Temperatur, bei der sich das Volumen des flüssigen Abgasnachbehandlungsmittels gegenüber der ersten Temperatur verringert hat, zumindest teilweise in die Nebenkammer zurückzieht. Ist das Abgasnachbehandlungsmittel eine wässrige Lösung, insbesondere eine wässrige Harnstofflösung, so zieht sich das Material bei Temperaturabnahme zusammen.

In einer nicht erfindungsgemäßen Ausgestaltung ist vorgesehen, dass das Volumenkompensationselement aus einer Flüssigkeit und einer die Flüssigkeit aufnehmenden flexiblen Hülle besteht, wobei die Flüssigkeit durch Volumenänderung die Volumenveränderung des Abgasnachbehandlungsmittels im Arbeitsraum weitgehend kompensiert.
Erfindungsgemäß ist vorgesehen, dass das Volumenkompensationselement über mindestens ein verlagerbares und/oder verformbares Zwischenelement mit dem Arbeitsraum wirkverbunden ist, wobei das Zwischenelement in Abhängigkeit von der Volumenänderung des Volumenkompensationselements unterschiedlich weit in den Arbeitsraum hineinragt. Das Volumenkompensationselement ist mit dem Arbeitsraum und mit dem im Arbeitsraum befindlichen Abgasnachbehandlungsmittel nur über das verlagerbare und/oder verformbare Zwischenelement wirkverbunden. Ändert sich die Temperatur, so verlagert und/oder verformt das Volumenkompensationselement das Zwischenelement derart, dass es mehr oder weniger weit in den Arbeitsraum hineinragt und somit die Volumenveränderung des im Arbeitsraum befindlichen flüssigen Abgasnachbehandlungsmittels weitgehend kompensiert. Das verlagerbare und/oder verformbare Zwischenelement ist ein Zwischenelement aus einem inkompressiblen Material. Das Material des Zwischenelements ist temperaturbeständig. Es ist fest oder flüssig mit einer festen, flexiblen Hülle. Das Zwischenelement aus festem Material ist insbesondere eine starre Stange.
Weiterhin ist mit Vorteil vorgesehen, dass das Volumenkompensationselement mit dem Zwischenelement zu deren Verbindung eine Hintergriffstruktur bildet. Das Volumenkompensationselement ist insbesondere mit einer Seite des Zwischenelements verbunden, während die gegenüberliegende Seite des Zwischenelements zur Kompensation der Volumenveränderung mehr oder weniger weit in den Arbeitsraum hineinragt. Durch dieses Hineinragen in den Arbeitsraum wird das Arbeitsraumvolumen an die Volumenveränderung des im Arbeitsraum befindlichen Abgasnachbehandlungsmittels bei einem Phasenübergang angepasst.

### Kurze Beschreibung der Zeichnungen

Die Zeichnungen veranschaulichen die Erfindung anhand von Ausführungsbeispielen. Es zeigt:
Figur 1 eine als Ventil ausgebildete Vorrichtung, deren Arbeitsraum mit flüssigem Abgasnachbehandlungsmittel gefüllt ist,
Figur 2 das Ventil der Figur 1, wobei der Arbeitsraum mit gefrorenem Abgasnachbehandlungsmittel gefüllt ist,
Figur 3 eine als Ventil ausgebildete Vorrichtung nach einem zweiten nicht erfindungsgemäßen Ausführungsbeispiel, deren Arbeitsraum mit flüssigem Abgasnachbehandlungsmittel gefüllt ist,
Figur 4 das in der Figur 3 dargestellte Ventil, dessen Arbeitsraum mit gefrorenem Abgasnachbehandlungsmittel gefüllt ist,
Figur 5 eine als Ventil ausgebildete Vorrichtung nach einem zweiten nicht erfindungsgemäßen Ausführungsbeispiel,
Figur 6 eine als Ventil ausgebildete Vorrichtung nach einem dritten Ausführungsbeispiel,
Figur 7 eine als Ventil ausgebildete Vorrichtung nach einem vierten Ausführungsbeispiel und
Figur 8 eine als Ventil ausgebildete Vorrichtung nach einem fünften Ausführungsbeispiel.

### Ausführungsform(en) der Erfindung

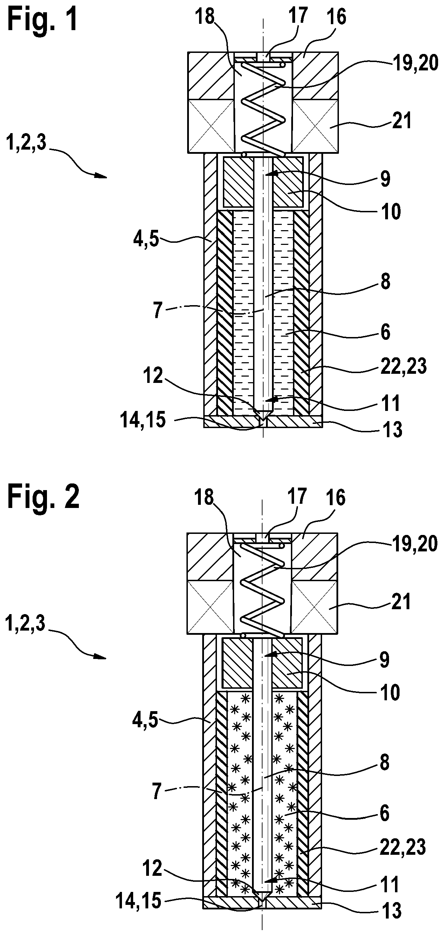

Die Figuren 1 bis 7 zeigen verschiedene Ausführungsformen einer als Ventil 1 ausgebildeten Vorrichtung 2 zum dosierten Einspritzen eines flüssigen Abgasnachbehandlungsmittels in eine Abgasanlage eines nicht gezeigten Verbrennungsmotors. Die Vorrichtung 2 ist Teil eines nicht vollständig dargestellten Einspritzsystems mit Komponenten wie zum Beispiel einem Tank, einer Fördereinrichtung, einer Dosiereinrichtung, einer Einspritzeinrichtung und einem die vorstehend genannten Komponenten verbindenden Leitungssystem. Das in den Figuren 1 bis 7 gezeigte Ventil 1 ist ein Ausführungsbeispiel einer Einspritzeinrichtung. Alle genannten Komponenten des Einspritzsystems weisen einen Arbeitsraum auf, der im Betrieb des Einspritzsystems mit flüssigem Abgasnachbehandlungsmittel gefüllt ist. Jede der vorgenannten Komponenten kann auch als erfindungsgemäße Vorrichtung ausgebildet sein. In allen gezeigten Ausführungsbeispielen ist das Abgasnachbehandlungsmittel eine wässrige Harnstofflösung.

Die Figur 1 zeigt eine nicht erfindungsgemäße als Ventil 1 ausgebildete Vorrichtung 2 zum dosierten Einspritzen eines flüssigen Abgasnachbehandlungsmittels in einer Abgasanlage eines nicht gezeigten Verbrennungsmotors. Der Verbrennungsmotor ist insbesondere der Verbrennungsmotor eines Fahrzeugs. Das Ventil 1 ist als Einspritzventil 3 ausgebildet und weist einen als Ventilkörper 4 ausgebildeten Vorrichtungskörper 5 auf. Der Vorrichtungskörper 5 weist einen Arbeitsraum 6 mit einer Längsachse 7 auf. Im Arbeitsraum 6 ist eine Ventilnadel 8 angeordnet, die an ihrem einen axialen Endbereich 9 von einem Anker 10 des Ventils 1 umgeben ist. Der Anker 10 dient gleichzeitig der Führung der Ventilnadel 8 im Arbeitsraum 6, sodass die Ventilnadel 8 entlang der Längsachse 7 verschieblich gelagert ist. Ein dem Endbereich 9 gegenüberliegender Endbereich 11 der Ventilnadel 8 weist ein Nadelende 12 (Nadelspitze) auf. Im Bereich des Nadelendes 12 weist der Ventilkörper 4 eine Spritzlochscheibe 13 mit einem als Spritzloch 14 ausgebildeten Durchbruch 15 auf Höhe der Längsachse 7 auf, durch den flüssiges Abgasnachbehandlungsmittel in die Abgasanlage eingespritzt wird. An einem der Spritzlochscheibe 13 gegenüberliegenden Ende 16 weist der Ventilkörper 4 einen Zulauf 17 auf, der in einen Vorraum 18 mündet. Im Vorraum 18 ist eine koaxial zur Längsachse 7 angeordnete Schraubenfeder 19 angeordnet, die den Anker 10 und die mit dem Anker 10 verbundene Ventilnadel 8 mit ihrem Nadelende 12 zum Verschließen des Ventils 1 in das Spritzloch 14 drückt. Dabei dichtet die Ventilnadel 8 mit ihrem Nadelende 12 den Arbeitsraum 6 gegenüber der Umgebung des Ventils 1 ab. Die Schraubenfeder 19 ist somit eine Schließfeder 20 zum Schließen des Ventils 1. Zum Öffnen des Ventils 1 weist dieses eine Spule 21 auf, die den Vorraum 18 in einem Axialabschnitt umfänglich umgibt. Im Arbeitsraum 6 befindet sich ein als Volumenkompensationshülse 22 ausgebildetes Volumenkompensationselement 23. Die Volumenkompensationshülse 22 umgibt dabei in einem Axialbereich umfänglich die Ventilnadel 8.

Es ergibt sich folgende Funktion des als Einspritzventil 3 ausgebildeten Ventils 1: Im unbestromten Zustand der Spule 21 dichtet die von der Schließfeder 20 vorgespannte Ventilnadel 8 den Arbeitsraum 6 gegenüber dem Durchbruch 15 ab. Über den Zulauf 17 wird wässrige Harnstofflösung (AdBlue) über den Vorraum 18 in den Arbeitsraum 6 gefüllt. Zum Einspritzen des flüssigen Abgasnachbehandlungsmittels wird die Spule 21 bestromt, sodass der Anker 10 die Ventilnadel 8 hebt und eine Passage zwischen dem Arbeitsraum 6 und dem Spritzloch 14 frei wird. Durch die Passage und das Spritzloch 14 wird das flüssige Abgasnachbehandlungsmittel in einem Teil der Abgasanlage des Verbrennungsmotors dosiert eingespritzt. Die Dosierung ergibt sich durch den im Arbeitsraum 6 herrschenden Druck des Abgasnachbehandlungsmittels (-: flüssiges Abgasnachbehandlungsmittel) und die Öffnungszeit des Ventils 1.

Bei der wässrigen Harnstofflösung als Abgasnachbehandlungsmittel, ergibt sich bei einem typischen Arbeitsdruck von etwa 5 bar im Ventil 1 ein Gefrierpunkt von - 11°C. Diese Temperatur liegt in einem Temperaturbereich, der -zumindest im Winter- außerhalb geschlossener Räume erreicht wird. Ist die Vorrichtung 2 zum Beispiel in einem Kraftfahrzeug verbaut, dessen Verbrennungsmotor längere Zeit außer Betrieb ist, kann das Abgasnachbehandlungsmittel in der Vorrichtung 2 einfrieren. Basiert das Abgasnachbehandlungsmittel auf einer wässrigen Lösung, so kommt es aufgrund der Anomalie des Wassers zu einer Ausdehnung des Abgasnachbehandlungsmittels im Arbeitsraum 6 der Vorrichtung 2, die zu einer Beschädigung der Vorrichtung 2 führen kann.

Zur Kompensation der Volumenveränderung des im Arbeitsraum 6 befindlichen flüssigen Abgasnachbehandlungsmittels weist die Vorrichtung 2 das Volumenkompensationselement 23 auf. Das Material und das Volumen des Volumenkompensationselements 23 ist dabei gerade so gewählt, dass die aus temperaturabhängigen Ausdehnungskoeffizienten des Materials resultierende Volumenänderung des Volumenkompensationselements 23 bei der Temperaturänderung im Bereich des Gefrierpunkts des Abgasnachbehandlungsmittels die Volumenveränderung des im Arbeitsraum befindlichen flüssigen Abgasnachbehandlungsmittels gerade kompensiert.

Die Figur 2 zeigt das Ventil 1 der Figur 1, wobei das im Arbeitsraum 6 des Ventils 1 befindliche Abgasnachbehandlungsmittel gefroren (*: gefrorenes Abgasnachbehandlungsmittel) ist. Entsprechend der Volumenveränderung (hier Volumenvergrößerung) des als wässrige Harnstofflösung ausgebildeten Abgasnachbehandlungsmittels hat sich das Volumen des Volumenkompensationselements 23 verringern, sodass beim Einfrieren des Abgasnachbehandlungsmittels kein schädigender Druck im Arbeitsraum 6 entsteht. Im Ausführungsbeispiel der Figuren 1 und 2 ist das Volumenkompensationselement 23 dazu direkt im Arbeitsraum 6 angeordnet. Bei dieser Anordnung ändert das Volumenkompensationselement 23 - auch ohne temperaturabhängige Volumenänderung - das zur Aufnahme des Abgasnachbehandlungsmittels nutzbare Arbeitsraumvolumen. Ein verringertes Arbeitsraumvolumen bewirkt einen geringeren totalen Druckanstieg beim Einfrieren der wässrigen Harnstofflösung.

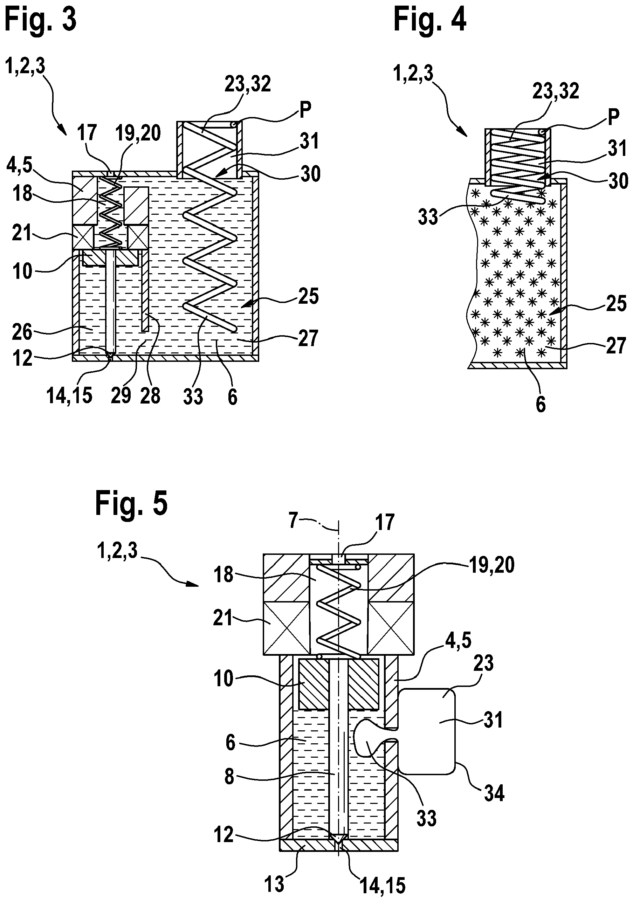

Die Figur 3 zeigt eine nicht erfindungsgemäße Vorrichtung 2, die in weiten Teilen der Vorrichtung 2 entsprechend der Ausführungsform der Figur 1 entspricht, sodass hier nur auf die Unterschiede eingegangen wird. Die Vorrichtung 2 der Figur 3 ist ebenfalls als Ventil 1 ausgebildet, wobei der Arbeitsraum 6 auf einen Seitenbereich 25 der Vorrichtung 2 erweitert ist. Der Arbeitsraum 6 weist dabei eine erste Kammer 26 auf, die im Wesentlichen dem kompletten Arbeitsraum 6 der Vorrichtung 2 der Figur 1 entspricht und einer zweiten Kammer 27, die im Seitenbereich 25 angeordnet ist. Die beiden Kammern 26, 27 sind bereichsweise durch eine Wand 28 voneinander getrennt, jedoch im Verbindungsbereich 29 strömungstechnisch direkt miteinander verbunden. Die zweite Kammer 27 des Arbeitsraums 6 ist über eine Verbindung 30 mit einer Nebenkammer 31 verbunden, in der das als Federelement 32 ausgebildete Volumenkompensationselement 23 so befestigt ist, dass es sich in Abhängigkeit von der Temperatur in dem Arbeitsraum 6 - hier die zweite Kammer 27 - mehr oder weniger hinein erstrecken kann. Dabei passt das Volumenkompensationselement 23 durch seinen in den Arbeitsraum 6 hineinragenden Teil 33, das für das Abgasnachbehandlungsmittel effektiv zur Verfügung stehende Arbeitsraumvolumen der Volumenänderung des im Arbeitsraum 6 befindlichen flüssigen Abgasnachbehandlungsmittels bei dessen Phasenübergang zur festen Phase (gefrieren) an.

Die Figur 4 zeigt die nicht erfindungsgemäße Vorrichtung 2 der Figur 3 bei einer Temperatur, bei der das Abgasnachbehandlungsmittel gefroren ist. Das vergrößerte Volumen der gefrorenen wässrigen Harnstofflösung ist dadurch kompensiert, dass ein geringerer Teil 33 des Volumenkompensationselements 23 in den Arbeitsraum 6 hineinragt.

Die Figur 5 zeigt ein weiteres nicht erfindungsgemäßes Ausführungsbeispiel der Vorrichtung 2, wobei das Volumenkompensationselement 23 eine Flüssigkeit oder ein Gel aufweist, das von einer flexiblen, verformbaren Hülle 34 eingeschlossen ist. Das Funktionsprinzip des Volumenkompensationselements 23 der Figur 5 entspricht im Wesentlichen dem Funktionsprinzip der Figur 3. Auch hier erstreckt sich das Volumenkompensationselement 23 je nach Temperatur mehr oder weniger weit in den Arbeitsraum 6 hinein und kompensiert dadurch die Volumenveränderung des im Arbeitsraum 6 befindlichen Abgasnachbehandlungsmittels bei einem Phasenübergang. Alternativ zur Verwendung eines Gels mit Hülle 34 kann es auch die Oberfläche des Volumenkompensationselements 23 sein, die diese veränderbare Form annimmt. Als weitere Alternative ist ein Stempel oder Kolben denkbar.

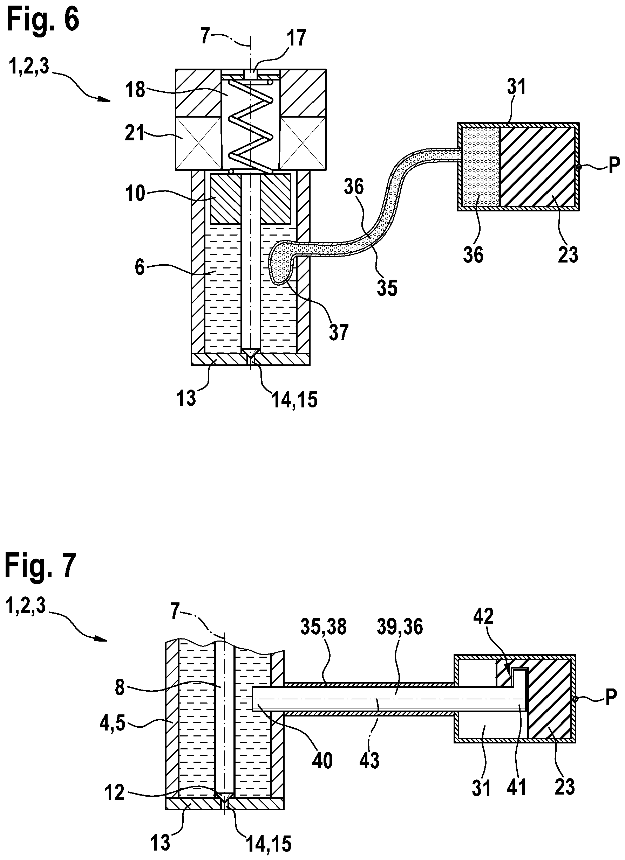

Die Figur 6 zeigt eine erfindungsgemäße Vorrichtung 2, die im Wesentlichen der Vorrichtung 2 der Figur 5 entspricht. Die Vorrichtung 2 weist ebenfalls eine Nebenkammer 31 auf, die jedoch über eine als Verbindungsleitung 35 ausgebildete Verbindung 30 mit dem Arbeitsraum 6 verbunden ist. Das Volumenkompensationselement 23 ist vollständig innerhalb der Nebenkammer 31 angeordnet und dort an mindestens einem Befestigungspunkt P fixiert und drückt ein Zwischenelement (Koppelelement) 36 mehr oder weniger weit in den Arbeitsraum 6 hinein. Das Zwischenelement 36 ist bei dieser Ausführung der Vorrichtung 2 eine Flüssigkeit oder ein Gel (zähes Medium), die den verbleibenden Teil der Nebenkammer 31 und die Verbindungsleitung 35 ausfüllt und eine zwischen der Verbindungsleitung 35 und dem Arbeitsraum 6 befindliche Membran 37 - getrieben von der Volumenänderung des Volumenkompensationselement 23 - mehr oder weniger weit in den Arbeitsraum hineinverlagert. Durch die Verlagerung der Membran 37 wird das Arbeitsraumvolumen des Arbeitsraums 6 entsprechend der Volumenveränderung des im Arbeitsraum 6 befindlichen Abgasnachbehandlungsmittels bei einem Phasenübergang angepasst.

Die Figur 7 zeigt ein erfindungsgemäßes Ausführungsbeispiel der Vorrichtung 2, das im Wesentlichen dem Ausführungsbeispiel der Figur 6 entspricht, sodass hier nur auf die Unterschiede eingegangen wird: Die Verbindungsleitung 35 zwischen der Nebenkammer 31 und dem Arbeitsraum 6 ist als starre, geradlinige Verbindungsleitung 38 ausgebildet. Das Zwischenelement 36 ist als Kolben 39 (Stab) ausgebildet, der mit seinem einen Ende 40 in den Arbeitsraum 6 und mit seinem anderen Ende 41 in die Nebenkammer 31 hineinragt. Das Ende 41 des Kolbens 39 bildet mit dem Volumenkompensationselement 23 in der Nebenkammer 31 eine Hintergriffstruktur 42. Über die Hintergriffstruktur 42 schiebt das am Befestigungspunkt P fixierte Volumenkompensationselement 23 durch seine temperaturabhängige Volumenänderung den Kolben 39 entlang einer Achse 43 mehr oder weniger weit in den Arbeitsraum 6 hinein, sodass das Arbeitsraumvolumen des Arbeitsraums 6 entsprechend der Volumenveränderung des im Arbeitsraum 6 befindlichen flüssigen Abgasnachbehandlungsmittels bei dessen Phasenübergang angepasst wird.

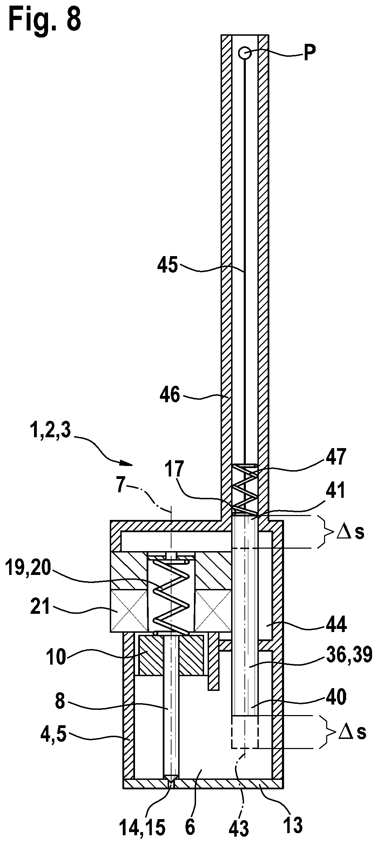

Die Figur 8 zeigt ein weiteres erfindungsgemäßes Ausführungsbeispiel der Vorrichtung 2, das im Wesentlichen dem Ausführungsbeispiel der Figur 7 entspricht, sodass hier nur auf die Unterschiede eingegangen wird. Der Zulauf 17 führt in den Vorraum 18, der über einen Bypass 44 entlang der Achse 43 mit dem Arbeitsraum 6 strömungstechnisch verbunden ist. In dem Bypass 44 ist entlang der Achse 43 das als Kolben (Stab) 39 ausgebildete Zwischenelement 36 angeordnet, das mit seinem einen Ende 40 in den Arbeitsraum 6 hineinragt. Am gegenüberliegenden Ende 41 ist das Zwischenelement 36 mit dem als Draht 45 ausgebildeten Volumenkompensationselement 23 verbunden. Das Volumenkompensationselement 23 ist in einer Zulaufleitung 46 der als Ventil 1 ausgebildeten Vorrichtung 2 mit einem Ende am Befestigungspunkt P fixiert. Der Draht 45 weist aufgrund seiner Geometrie im Wesentlichen eine temperaturabhängige Längenausdehnung auf und dient als temperaturabhängiger Steller, der eine Hubbewegung des Kolbens 39 erzeugt. Über den größeren Kolbenquerschnitt wird bei gleichem Hub Δs ein größeres Volumen V im Arbeitsraum 6 freigegeben als beim Draht 45. Durch dieses Volumen V wird die Expansion des als wässriger Harnstofflösung ausgebildeten Abgasnachbehandlungsmittels kompensiert. Dabei wird der Kolben 39 so verschoben, dass er sich in einen Bereich der Vorrichtung 2 bewegt, der selbst bei Gefrierdehnung flexibel ist. Bei eingefrorener Harnstofflösung zieht der Draht 45 den Kolben 39 bis in den insbesondere flexiblen Zulauf 17 zurück. Die Position des Kolbens 39 ergibt sich aus dem Kräftegleichgewicht der Zugkraft des Drahtes 45 und der Druckkraft einer als Druckfeder ausgebildeten Rückstellfeder 47. Diese ist im Zulauf 17 angeordnet und presst den Kolben 39 in Richtung des Arbeitsraums 6. Die Rückstellfeder 47 ist so ausgelegt, dass sich der Kolben 39 durch hydraulische Druckschwingungen nicht bewegt. Alternativ kann der Draht 45 zur Reduktion der benötigten Baulänge auf einer Rolle aufgewickelt sein (nicht dargestellt). Diese ist im Zulauf 17 und/oder in der Zulaufleitung 46 angeordnet.

In den Figuren 1 bis 7 ist zur Verdeutlichung der Funktion des Volumenkompensationselements 23 der Aggregatszustand des Abgasnachbehandlungsmittels (*: gefrorene Harnstofflösung oder -: flüssige Harnstofflösung) im Arbeitsraum 6 eingezeichnet. Dies bedeutet nicht, dass die anderen Räume (zum Beispiel Vorraum 18, Nebenkammer 31, Zulaufleitung 45) nicht auch mit Abgasnachbehandlungsmittel gefüllt sein können.

## Patentansprüche

1. Vorrichtung (2) zum dosierten Einspritzen eines flüssigen Abgasnachbehandlungsmittels, vorzugsweise einer wässrigen Harnstofflösung, in eine Abgasanlage eines Verbrennungsmotors, mit mindestens einem einen Arbeitsraum (6) aufweisenden Vorrichtungskörper (5) und mindestens einem Volumenkompensationselement (23), das ein Arbeitsraumvolumen des Arbeitsraums (6) entsprechend einer Volumenveränderung des im Arbeitsraum (6) befindlichen flüssigen Abgasnachbehandlungsmittels bei dessen Phasenübergang anpasst, **dadurch gekennzeichnet, dass** das Material des Volumenkompensationselements (23) einen derartigen temperaturabhängigen Ausdehnungskoeffizienten aufweist, das die Volumenveränderung mit einer durch das Volumenkompensationselement (23) bewirkten Volumenänderung kompensiert wird, wobei das Volumenkompensationselement (23) über mindestens ein verlagerbares und/oder verformbares Zwischenelement (36) mit dem Arbeitsraum (6) wirkverbunden ist, wobei das Zwischenelement (36) in Abhängigkeit von der Volumenveränderung des Volumenkompensationselements (23) unterschiedlich weit in den Arbeitseraum (6) hineinragt.

2. Vorrichtung nach Anspruch 1, **dadurch gekennzeichnet, dass** das Volumenkompensationselement (23) in einer Nebenkammer (31) angeordnet ist.

3. Vorrichtung nach Anspruch 2, **dadurch gekennzeichnet, dass** die Nebenkammer (31) über eine Verbindungsleitung (35) mit dem Arbeitsraum (6) verbunden ist.

4. Vorrichtung nach Anspruch 3, **dadurch gekennzeichnet, dass** das Volumenkompensationselement (23) vollständig innerhalb der Nebenkammer (31) angeordnet ist, und dass das Zwischenelement (36) eine Flüssigkeit oder ein Gel ist und den verbleibenden Teil der Nebenkammer (31) und die Verbindungsleitung (35) ausfüllt und eine zwischen der Verbindungsleitung (35) und dem Arbeitsraum (6) befindliche Membran (37), getrieben von der Volumenänderung des Volumenkompensationselements (23), mehr oder weniger weit in den Arbeitsraum (6) hinein verlagert.

5. Vorrichtung nach einem der vorhergehenden Ansprüche, **dadurch gekennzeichnet, dass** die Vorrichtung (2) als Ventil (1) ausgebildet ist.

6. Vorrichtung nach einem der vorhergehenden Ansprüche, **dadurch gekennzeichnet, dass** das Zwischenelement (36) als Kolben (39) ausgebildet ist, der mit seinem einen Ende (40) in den Arbeitsraum (6) und mit seinem anderen Ende (41) in die Nebenkammer (31) hineinragt.

7. Vorrichtung nach einem der vorhergehenden Ansprüche, **dadurch gekennzeichnet, dass** das Volumenkompensationselement (23) mit dem Zwischenelement (36) zu deren Verbindung eine Hintergriffstruktur (42) bildet.

8. Vorrichtung nach Anspruch 5, **dadurch gekennzeichnet, dass** das Volumenkompensationselement (23) als Draht (45) ausgebildet in einer Zulaufleitung (46) des Ventils (1) angeordnet und mit einem Ende an einem Befestigungspunkt (P) fixiert ist, wobei das Zwischenelement (36) als Kolben (39) mit einem Ende (40) in den Arbeitsraum (6) hinein ragt und an seinem gegenüberliegenden Ende (41) mit dem Volumenkompensationselement (23) verbunden ist.

## Claims

1. Device (2) for the dosed injection of a liquid exhaust-gas aftertreatment agent, preferably an aqueous urea solution, into an exhaust system of an internal combustion engine, having at least one device body (5), which has a working chamber (6), and having at least one volume compensation element (23), which adapts a working chamber volume of the working chamber (6) in accordance with a change in volume of the liquid exhaust-gas aftertreatment agent situated in the working chamber (6) during the phase transition thereof, **characterized in that** the material of the volume compensation element (23) has such a temperature-dependent coefficient of expansion that the change in volume is compensated by means of a change in volume effected by the volume compensation element (23), wherein the volume compensation element (23) is operatively connected by means of at least one displaceable and/or deformable intermediate element (36) to the working chamber (6), wherein the intermediate element (36) projects into the working chamber (6) to different extents in a manner dependent on the change in volume of the volume compensation element (23).

2. Device according to Claim 1, **characterized in that** the volume compensation element (23) is arranged in a secondary chamber (31).

3. Device according to Claim 2, **characterized in that** the secondary chamber (31) is connected to the working chamber (6) via a connecting line (35).

4. Device according to Claim 3, **characterized in that** the volume compensation element (23) is arranged entirely within the secondary chamber (31), and **in that** the intermediate element (36) is a liquid or a gel and fills the remaining part of the secondary chamber (31) and the connecting line (35) and displaces a diaphragm (37), which is situated between the connecting line (35) and the working chamber (6), into the working chamber (6) to a greater or lesser extent in a manner driven by the change in volume of the volume compensation element (23).

5. Device according to one of the preceding claims, **characterized in that** the device (2) is formed as a valve (1).

6. Device according to one of the preceding claims, **characterized in that** the intermediate element (36) is formed as a piston (39) which projects with one end (40) thereof into the working chamber (6) and with the other end (41) thereof into the secondary chamber (31).

7. Device according to one of the preceding claims, **characterized in that** the volume compensation element (23) forms an undercut structure (42) with the intermediate element (36) for the connection thereof.

8. Device according to Claim 5, **characterized in that** the volume compensation element (23), formed as a wire (45), is arranged in a feed line (46) of the valve (1) and is fixed by one end to a fastening point (P), wherein the intermediate element (36), as a piston (39), projects with one end (40) into the working chamber (6) and, at its opposite end (41), is connected to the volume compensation element (23).

## Revendications

1. Dispositif (2) pour l'injection dosée d'un agent de post-traitement de gaz d'échappement fluide, de préférence d'une solution d'urée aqueuse, dans une installation de gaz d'échappement d'un moteur à combustion interne, comprenant au moins un corps de dispositif (5) présentant un espace de travail (6) et au moins un élément de compensation de volume (23), qui adapte un volume d'espace de travail de l'espace de travail (6) en fonction d'une variation de volume de l'agent de post-traitement de gaz d'échappement fluide se trouvant dans l'espace de travail (6) lors de son changement de phase, **caractérisé en ce que** le matériau de l'élément de compensation de volume (23) présente un coefficient de dilatation dépendant de la température qui est tel que la variation de volume soit compensée avec une variation de volume causée par l'élément de compensation de volume (23), l'élément de compensation de volume (23) étant en liaison fonctionnelle avec l'espace de travail (6) par le biais d'au moins un élément intermédiaire (36) déplaçable et/ou déformable, l'élément intermédiaire (36) pénétrant dans une mesure différente dans l'espace de travail (6) en fonction de la variation de volume de l'élément de compensation de volume (23).

2. Dispositif selon la revendication 1, **caractérisé en ce que** l'élément de compensation de volume (23) est disposé dans une chambre secondaire (31).

3. Dispositif selon la revendication 2, **caractérisé en ce que** la chambre secondaire (31) est connectée à l'espace de travail (6) par le biais d'une conduite de liaison (35).

4. Dispositif selon la revendication 3, **caractérisé en ce que** l'élément de compensation de volume (23) est disposé complètement à l'intérieur de la chambre secondaire (31), et **en ce que** l'élément intermédiaire (36) est un liquide ou un gel et remplit la partie restante de la chambre secondaire (31) et la conduite de liaison (35) et déplace plus ou moins loin dans l'espace de travail (6) une membrane (37) se trouvant entre la conduite de liaison (35) et l'espace de travail (6), entraînée par la variation de volume de l'élément de compensation de volume (23).

5. Dispositif selon l'une quelconque des revendications précédentes, **caractérisé en ce que** le dispositif (2) est réalisé sous forme de soupape (1).

6. Dispositif selon l'une quelconque des revendications précédentes, **caractérisé en ce que** l'élément intermédiaire (36) est réalisé sous forme de piston (39) qui pénètre avec l'une de ses extrémités (40) dans l'espace de travail (6) et avec son autre extrémité (41) dans la chambre secondaire (31).

7. Dispositif selon l'une quelconque des revendications précédentes, **caractérisé en ce que** l'élément de compensation de volume (23) forme avec l'élément intermédiaire (36), en vue de sa liaison, une structure avec engagement par l'arrière (42).

8. Dispositif selon la revendication 5, **caractérisé en ce que** l'élément de compensation de volume (23), réalisé sous forme de fil métallique (45), est disposé dans une conduite d'alimentation (46) de la soupape (1) et est fixé par une extrémité à un point de fixation (P), l'élément intermédiaire (36) pénétrant sous forme de piston (39) avec une extrémité (40) dans l'espace de travail (6) et étant connecté au niveau de son extrémité opposée (41) à l'élément de compensation de volume (23).
